# EUROPÄISCHE PATENTSCHRIFT

(11) **EP 0 833 764 B1**
(45) Veröffentlichungstag und Bekanntmachung des Hinweises auf die Patenterteilung: **09.07.2003**
(21) Anmeldenummer: 97915303.8
(22) Anmeldetag: 26.02.1997
(51) Int. Cl.: B60S 1/08, G01N 21/43

(54) **VORRICHTUNG ZUM ERFASSEN VON BENETZUNGSEREIGNISSEN AUF EINER SCHEIBE**
DEVICE FOR DETECTING THE LEVEL OF HUMIDITY ON A PANE
DISPOSITIF DE DETECTION DU NIVEAU D'HUMIDITE SUR UNE VITRE

(30) Priorität: 06.03.1996 DE 19608648
(43) Veröffentlichungstag der Anmeldung: 08.04.1998
(73) Patentinhaber: ROBERT BOSCH GMBH, 70442 Stuttgart (DE)
(72) Erfinder: PIENTKA, Rainer, D-77855 Achern (DE); THROL, Manfred, D-35578 Wetzlar (DE)
(86) Internationale Anmeldenummer: DE9700335
(87) Internationale Veröffentlichungsnummer: WO97032762

(56) Entgegenhaltungen:
- DE-A- 3 806 881
- US-A- 4 652 745
- US-A- 4 676 638
- US-A- 4 701 613
- US-A- 5 263 111

## Beschreibung

### Stand der Technik

Die Erfindung bezieht sich auf eine Vorrichtung zum Erfassen von Benetzungsereignissen auf einer Scheibe, insbesondere Windschutzscheibe eines Kraftfahrzeugs, mit einer auf einer Schaltungsplatine getragenen, mindestens einen Sender aufweisenden Strahlungssendereinrichtung, mit einem an der Scheibe ankoppelbaren im wesentlichen parallel zu der Schaltungsplatine ausgerichteten Strahlleiter, der zum Aufnehmen der abgesandten Strahlung eine Strahleintrittsfläche und zum Abgeben der Strahlung eine Strahlaustrittsfläche aufweist, und mit einer die austretende Strahlung aufnehmenden, ebenfalls auf der Schaltungsplatine getragenen Strahlungsempfängereinrichtung, die mindestens einen Empfänger aufweist.

Eine Vorrichtung dieser Art ist in der DE 44 06 398 A1 als bekannt ausgewiesen. Bei dieser bekannten Vorrichtung in Form eines an der Windschutzscheibe eines Kraftfahrzeugs anbringbaren Regensensors ist parallel zu einer flachen Längsebene eines transparenten Lichtleiters, mit dem Licht in die Scheibe eingekoppelt und aus dieser ausgekoppelt wird, eine Schaltungsplatine angeordnet, die mittels elastischer Verbindungsleitungen an eine zweite Platine angeschlossen ist. Auf der Schaltungsplatine sind in Halterungen gelagert ein Sender und ein Empfänger angeschlossen, die mit ihrem lichtabgebenden bzw. lichtaufnehmenden Element etwa bis in eine parallel zu der Ebene der Schaltungsplatine liegende Mittelebene des Lichtleiters derart vorragen, dass die optischen Achsen des Senders und Empfängers ebenfalls im wesentlichen in der Mittelebene des Lichtleiters liegen, um das Licht in den Lichtleiter einzukoppeln und aus diesem auszukoppeln. Die derartige Anordnung des Senders und Empfängers erfordert einen relativ großen Bauraum und zusätzliche Montageschritte bei der Fertigung, wobei auch auf eine exakte Positionierung des Senders und des Empfängers bezüglich des Lichtleiters bzw. Strahlungsleiters zu achten ist.

Mit der DE-A-3 806 881 ist eine Vorrichtung zum Erfassen von Benetzungsereignissen auf einer Scheibe bekannt geworden, bei der ein Sender und ein Empfänger von einer Schaltungsplatine getragen sind. Die Schaltungsplatine ist im Wesentlichen parallel zu einem Strahlleiter angeordnet, der Ablenkflächen aufweist, mit der die in den Strahlungsleiter eintretende bzw. aus dem Strahlungsleiter austretende Strahlung rechtwinklig in das Innere des Strahlungsleiters bzw. aus dem Strahlungsleiter herausgeführt wird.

### Vorteile der Erfindung

Der Erfindung liegt die Aufgabe zugrunde, eine Vorrichtung der eingangs angegebenen Art bereitzustellen, die einfacher zu fertigen ist und einen platzsparenderen Aufbau ergibt.

Diese Aufgabe wird mit den Merkmalen des Anspruchs 1 gelöst. Hiernach ist also vorgesehen, dass die Strahleintrittsfläche und/oder die Strahlaustrittsfläche auf der der Schaltungsplatine zugewandten parallelen Seite des Strahlungsleiters angeordnet ist/sind, und dass die optische Achse des Senders bzw. Empfängers senkrecht zu der Strahleintrittsfläche bzw. der Strahlaustrittsfläche ausgerichtet sind und dass der Strahlungsleiter zumindest eine eingangsseitige bzw. ausgangsseitige Ablenkfläche aufweist, mit der die in den Strahlungsleiter eingetretene Strahlung rechtwinklig in das Innere des Strahlungsleiters bzw. die aus dem Strahlungsleiter heraus auf den Empfänger zu richtende Strahlung rechtwinklig aus dem Innern des Strahlungsleiters geführt wird. Die optimale Anpassung der Strahlungsbündel an die Geometrien von Sender, Lichtleiter und Empfänger, wird dadurch ermöglicht, dass der Strahlungsleiter mehrere Umlenkflächen aufweist, mit denen die abgegebene Strahlung in einem eingangsseitigen Abschnitt in die Scheibe und die von der Scheibe kommende Strahlung in einem ausgangsseitigen Abschnitt auf die ausgangsseitige Ablenkfläche geführt wird und dass mindestens eine der Umlenkflächen und/oder eine Ablenkfläche zum Konvergieren oder zum Divergieren der Strahlung konvex nach außen bzw. konkav nach innen gekrümmt ist, wobei eine Spiegelung durch Totalreflexion erhalten bleibt. Dabei kann eine Bündelung bzw. Aufweitung der Strahlung dadurch erzielt werden, dass die Krümmung torisch ausgebildet ist. Aufgrund dieser Maßnahmen können Sender und/oder Empfänger ohne aufwendige Halterungen auf der Platine angeordnet werden, wodurch auch eine genaue Positionierung auf einfache Weise sichergestellt wird. Der Strahlungsleiter kann dabei ebenso einfach durch entsprechende Formung hergestellt werden wie bisher. Der Aufbau ergibt neben der einfacheren Fertigung auch eine Platzeinsparung und Miniaturisierung der gesamten Vorrichtung, wobei es in Verbindung mit anderen Maßnahmen gelingt, mit nur einer Schaltungsplatine auszukommen.

Ist vorgesehen, dass der mindestens eine Sender und der mindestens eine Empfänger als SMD-Bauelemente ausgebildet sind, so kann die Bestückung der Schaltungsplatine mit dem Sender und dem Empfänger im gleichen Arbeitsgang mit dem Aufbringen der übrigen elektrischen Bauelemente erfolgen, wodurch die Fertigung weiter vereinfacht ist. Dabei wird zudem eine sehr genaue Positionierung des Senders und des Empfängers erreicht.

Die Maßnahme, dass die Strahleintrittsfläche und/oder die Strahlaustrittsfläche als Sammellinsen ausgebildet sind, lässt es zu, dass der Sender und der Empfänger in kurzem Abstand von der Strahleintrittsfläche bzw. Strahlaustrittsfläche positioniert werden können, wobei das von dem Sender ausgestrahlte und das in den Empfänger eingestrahlte Strahlenbündel praktisch vollständig erfasst werden. Der Abstand zwischen Sender und Strahleintrittsfläche bzw. Empfänger und Strahlaustrittsfläche kann durch die Maßnahme noch verringert werden, dass die Sammellinsen der Strahleintritts- und Strahlaustrittsfläche als Fresnellinsen oder als mehrere einzelne auf einer ebenen Fläche angeordnete einzelne Linsenelemente ausbildet sind oder dass die Strahleintritts- und Strahlaustrittsfläche wechselseitig unterschiedlich mit diesen beiden Arten der Sammellinsen versehen sind. Dabei kann beispielsweise die Strahleintrittsfläche mit einzelnen Linsenelementen und die Strahlaustrittsfläche mit einer Fresnellinse oder umgekehrt versehen sein, wenn die Sender- bzw. Empfängerelemente sehr klein sind. Die einzelnen Linsenelemente ermöglichen es dabei, entsprechend viele zugeordnete Sender- bzw. Empfängerelemente auf der Schaltungsplatine anzuordnen, so dass die die Gesamtstrahlungsleistung der ausgesandten bzw. empfangenen Strahlung entsprechend erhöht werden kann.

Eine einfache Ausbildung des Strahlungsleiters wird dadurch erzielt, dass die Ablenkflächen auf der von der Schaltungsplatine abgelegenen Seite des Strahlungsleiters vorgesehen und bei Draufsicht auf die lange Schmalseite der Schaltungsplatine unter einem Winkel von 45° zur Ebene der Schaltungsplatine geneigt ist.

Ein vorteilhafter Aufbau mit zur Zeit erhältlichen Bauelementen besteht z.B. darin, dass mehrere Sender vorgesehen sind, denen auf der Strahleintrittsfläche jeweils ein separates Linsenelement zugeordnet ist, und dass ein Empfänger vorgesehen ist, dem auf der Strahlaustrittsfläche eine Fresnellinse zugeordnet ist.

Eine Vereinfachung des optischen Aufbaus wird dadurch erzielt, daß die Sammellinsen sphärisch ausgebildet sind.

Die Erfindung wird nachfolgend anhand eines Ausführungsbeispiels unter Bezugnahme auf die Zeichnungen näher erläutert. Es zeigen:
- Fig. 1: eine Vorderansicht der Vorrichtung zum Erfassen von Benetzungsereignissen auf einer Scheibe in einem an die Scheibe angekoppelten Zustand
- Fig. 2: die Vorrichtung gemäß Fig. 1 in Draufsicht und
- Fig. 3: eine Strahleintritts- oder Strahlaustrittsfläche mit mehreren einzelnen Linsenelementen.

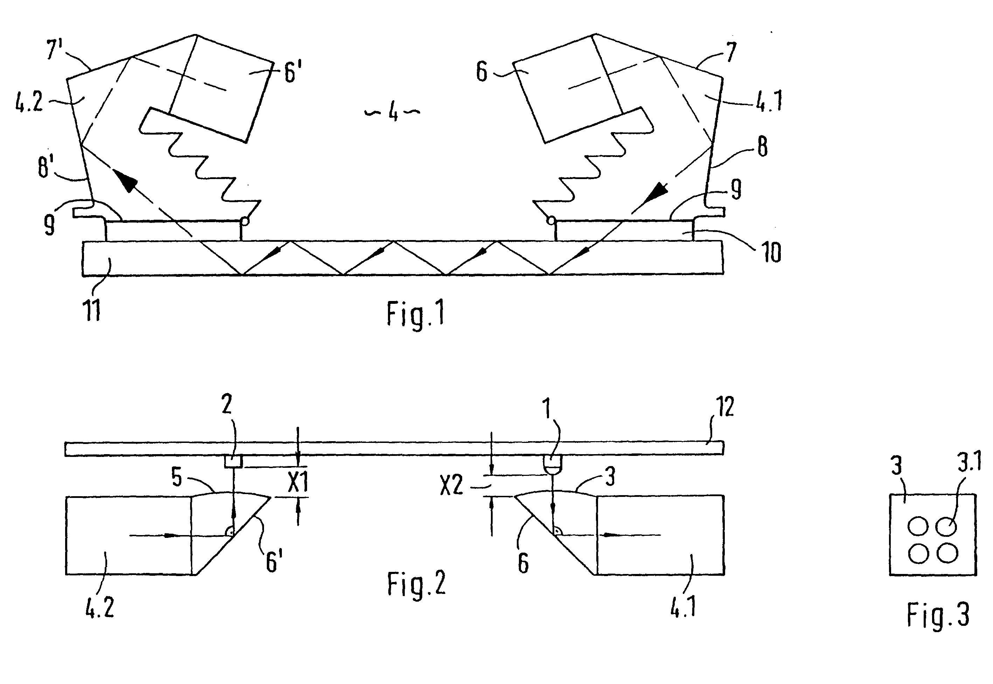

Die in Fig. 1 gezeigte Vorrichtung weist einen Strahlungsleiter 4 mit einem bezüglich des Strahlengangs eingangsseitigen Abschnitt 4.1 und einem ausgangsseitigen Abschnitt 4.2 auf. Der eingangsseitige Abschnitt 4.1 und der ausgangsseitige Abschnitt 4.2 sind jeweils über ein Silikonkissen 10 gegenüber der Außenseite der Scheibe 11 auf dieser angekoppelt, so daß der (mittels Pfeilen gekennzeichnete) Strahlengang durch das Innere der Scheibe 10 im Bereich zwischen dem eingangsseitigen Abschnitt 4.1 und dem davon beabstandeten ausgangsseitigen Abschnitt 4.2 durch das Innere der Scheibe 11 verläuft. Angrenzend an die Silikonkissen 10 weisen der eingangsseitige Abschnitt 4.1 und der ausgangsseitige Abschnitt 4.2 geeignete Koppelflächen 9 auf. Zur Strahlführung besitzt der Strahlungsleiter 4 weiterhin erste Umlenkflächen 7, 8 und zweite Umlenkflächen 8', 7', mit denen der Strahl gemäß Fig. 1 in der Zeichenebene umgelenkt wird.

Außerdem besitzen der eingangsseitige Abschnitt 4.1 und der ausgangsseitige Abschnitt 4.2 des Strahlungsleiters 4 im Bereich ihres Eingangs bzw. Ausgangs Ablenkflächen 6 bzw. 6', die einen in Fig. 1 senkrecht zur Zeichenebene eintreffenden Strahl bzw. senkrecht zur Zeichenebene herausgeführten Strahl in den Strahlungsleiter 4 bzw. aus diesem heraus lenken. Die Orientierung der eingangsseitigen Ablenkfläche 6 und der ausgangsseitigen Ablenkfläche 6' ist in Fig. 2 ersichtlich, die eine Draufsicht zeigt. Gemäß Fig. 2 ist parallel zu der hinteren Ebene des Strahlungsleiters 4 eine Schaltungsplatine 12 angeordnet, auf der ein Sender 1 und ein Empfänger 2, vorliegend in SMD-Technik, aufgebracht sind. Dem Sender in relativ geringem Abstand x2 gegenüberliegend ist eine Strahleintrittsfläche 3 des eingangsseitigen Abschnitts 4.1 gegenüberliegend angeordnet, während dem Empfänger 2 ebenfalls in relativ geringem Abstand x1 gegenüberliegend eine Strahlaustrittsfläche des ausgangsseitigen Abschnitts 4.2 angeordnet ist. Der von dem Sender 1 abgesandte Strahl wird an der unter einem Winkel von 45° zur Ebene der Schaltungsplatine 12 orientierten eingangsseitigen Ablenkfläche 6 unter rechtem Winkel in den Strahlungsleiter 4 gelenkt, so daß er, wie in Fig. 1 gezeigt, durch diesen parallel zur Ebene der Schaltungsplatine 12 bis zur ausgangsseitigen Ablenkfläche 6' geführt wird, die ebenfalls in einem Winkel von 45 ° zur Ebene der Schaltungsplatine 12 orientiert ist. Der an der ausgangsseitigen Ablenkfläche 6' rechtwinklig abgelenkte Strahl gelangt über die Strahlaustrittsfläche 5 auf den entsprechend positionierten Empfänger 2. Die in Fig. 2 gezeigten Ablenkflächen 6, 6' sind bezüglich der Zeichenebene ebenso wie die Schaltungsplatine 12 senkrecht orientiert.

Um das von dem Sender 1 abgegebene Strahlungsbündel vollständig zu erfassen und optimal auszunutzen und in den Strahlungsleiter zu führen, ist die Strahleintrittsfläche 3 als nach außen gewölbte Sammellinse ausgebildet, und auch die Strahlaustrittsfläche 5 ist als nach außen gewölbte Sammellinse ausgebildet, um die den Strahlungsleiter 4 verlassende Strahlung vollständig auf den Empfänger 2 zu führen. Häufig sind die in SMD-Technik ausgeführten Sender 1 relativ klein, so daß es günstig ist, zur Erhöhung der in den Strahlungsleiter 4 eingekoppelten Strahlungsleistung mehrere, z.B. vier Senderelemente aufzubringen. Die Strahleintrittsfläche 3 kann dann, wie in Fig. 3 gezeigt, den einzelnen Senderelementen zugeordnete Linsenelemente 3.1 aufweisen, die entsprechend dem abgesandten Strahlenbündel in Größe, Krümmung und Abstand von dem Sender 1 ausgebildet und angeordnet sind. Entsprechend können auch mehrere Empfängerelemente vorgesehen und die ausgangsseitige Ablenkfläche 6' kann mit entsprechenden Linsenelementen wie die eingangsseitige Ablenkfläche 6 versehen sein. In der Regel sind aber die in SMD-Technik erhältlichen Empfänger in Form von Fotodioden in ihren Abmessungen größer als die als Senderdioden ausgebildeten Sender 1. Für die Ausbildung der Strahlaustrittsfläche 5 ist es in diesem und in anderen Fällen vorteilhaft, die Sammellinse als Fresnellinse auszubilden, so daß sich insgesamt eine verhältnismäßig flache Struktur trotz relativ großer Krümmung und Sammeleigenschaft bzw. Bündeleigenschaft ergibt. Im Bedarfsfall kann auch die Strahleintrittsfläche 3 als Fresnellinsenstruktur ausgebildet sein. Alle Sammellinsen können zum Vereinfachen der Herstellung sphärisch geformt sein, da es auf genaue Abbildungseigenschaften weniger ankommt als auf eine gleichmäßige, kontrollierbare Lichtführung.

Um das durch den Strahlungsleiter 4 geführte Strahlungsbündel aufzuweiten oder zu konvergieren können die eingangsseitige und ausgangsseitige Ablenkfläche 6, 6' sowie die ersten und zweiten Umlenkflächen 7, 8, 7' und 8' ebenfalls konvex oder konkav, z.B. torisch gekrümmt sein. Auch können nur einzelne dieser Flächen eine entsprechende Krümmung zur Strahlformung aufweisen. Beispielsweise kann in dem eingangsseitigen Abschnitt 4.1 des Strahlungsleiters eine Aufweitung mittels negativer torischer Flächen, d.h. nach innen gekrümmter Flächen, und in dem ausgangsseitigen Abschnitt 4.2 des Strahlungsleiters 4 eine Konvergierung des Strahlenbündels mittels positiver, d.h. nach außen gekrümmter, Flächen erzielt werden, um eine optimale Ausnutzung des Strahlungsleiters und eine Bündelung auf dem Empfänger 2 zu erzielen.

Die Ausführung und Anordnung des Senders 1 und des Empfängers 2 in SMD-Technik läßt eine einfache Bestückung der Schaltungsplatine im gleichen Arbeitsschritt zu, in dem auch die übrigen Bauelemente aufgebracht werden. Dabei ist die Positionierung und Ausrichtung des Senders 1 und des Empfängers 2 stets sehr genau, so daß diesbezüglich keine zusätzlichen Maßnahmen erforderlich sind. Auch ergibt sich durch die Anordnung und relativ kleinen Abmessungen des Senders 1 und des Empfängers 2 mehr Platz auf der Schaltungsplatine 12 und eine günstigere Positionierungsmöglichkeit für andere elektrische Bauelemente, die zur Signalverarbeitung dienen. Es hat sich gezeigt, daß die beschriebenen Maßnahmen es zulassen, lediglich eine Schaltungsplatine zu verwenden, die in ihren Abmessungen etwa den Außenmaßen des Strahlungsleiters entspricht.

## Patentansprüche

1. Vorrichtung zum Erfassen von Benetzungsereignissen auf einer Scheibe (11), insbesondere Windschutzscheibe eines Kraftfahrzeugs, mit einer mindestens einen Sender (1) aufweisenden Strahlungssendereinrichtung, mit einem an der Scheibe (11) ankoppelbaren Strahlungsleiter (4), der zum Aufnehmen der abgesandten Strahlung eine Strahleintrittsfläche (3) und zum Abgeben der Strahlung eine Strahlaustrittsfläche (5) aufweist, und mit einer die austretende Strahlung aufnehmenden Strahlungsempfängereinrichtung, die mindestens einen Empfänger (2) aufweist, wobei der Sender (1) und der Empfänger (2) auf einer Schaltungsplatine (12) aufgebracht sind, und der Strahlungsleiter (4) annähernd parallel zu der Schaltungsplatine (12) ausgerichtet ist, und die Strahleintrittsfläche (3) und/oder die Strahlaustrittsfläche (5) auf der der Schaltungsplatine (12) zugewandten parallelen Seite des Strahlungsleiters (4) angeordnet ist/sind, und die optische Achse des Senders (1) oder Empfängers (2) senkrecht zu der Strahleintrittsfläche (3) oder der Strahlaustrittsfläche (5) ausgerichtet sind, und der Strahlungsleiter (4) zumindest eine eingangsseitige oder ausgangsseitige Ablenkfläche (6, 6') aufweist, mit der die in den Strahlungsleiter (4) eingetretene Strahlung rechtwinklig in das Innere des Strahlungsleiters (4) oder die aus dem Strahlungsleiter (4) heraus auf den Empfänger (2) zu richtende Strahlung rechtwinklig aus dem Innern des Strahlungsleiters (4) geführt wird, **dadurch gekennzeichnet, daß** der Strahlungsleiter (4) mehrere Umlenkflächen (7, 8, 7', 8') aufweist, mit denen die abgegebene Strahlung in einem eingangsseitigen Abschnitt (4.1) in die Scheibe (11) und die von der Scheibe (11) kommende Strahlung in einem ausgangsseitigen Abschnitt (4.2) auf die ausgangsseitige Ablenkfläche (6') geführt wird und daß mindestens eine der Umlenkflächen (7, 8, 7', 8') und/oder mindestens eine der Ablenkflächen (6, 6') zum Konvergieren oder Divergieren der Strahlung konvex nach außen oder konkav nach innen gekrümmt ist, wobei eine Spiegelung durch Totalrefelexion erhalten bleibt.

2. Vorrichtung zum Erfassen von Benetzungsereignissen auf einer Scheibe, insbesondere einer Windschutzscheibe eines Kraftfahrzeugs, mit einer mindestens einen Sender aufweisenden Strahlungssendereinrichtung, mit einem an der Scheibe ankoppelbaren Strahlungsleiter, der zum Aufnehmen der abgesandten Strahlung eine Strahleintrittsfläche aufweist, und mit einer die austretende Strahlung aufnehmenden Strahlungsempfängereinrichtung, die mindestens einen Empfänger aufweist, wobei der Strahlungsleiter (4) zumindest eine eingangsseitige bzw. ausgangsseitige Ablenkfläche (6, 6') aufweist, mit der die in den Strahlungsleiter (4) eingetretene Strahlung rechtwinklig in das Innere des Strahlungsleiters (4) bzw. aus dem Strahlungsleiter (4) heraus auf den Empfänger (2) zu richtende Strahlung rechtwinklig aus dem Inneren des Strahlungsleiters geführt ist, **dadurch gekennzeichnet, dass** der Strahlungsleiter (4) mehrere Umlenkflächen (7, 8, 7', 8') aufweist, mit denen die abgegebene Strahlung in einem eingangsseitigen Abschnitt (4.1) in die Scheibe (11) und die von der Scheibe (11) kommende Strahlung in einem ausgangsseitigen Abschnitt (4.2) auf die ausgangsseitige Ablenkfläche (6') geführt wird und dass mindestens eine der Umlenkflächen (7, 8, 7',8') und/oder mindestens eine der Ablenkflächen (6, 6') zum Konvergieren oder zum Divergieren der Strahlung konvex nach außen bzw. konkav nach innen gekrümmt ist, wobei eine Spiegelung durch Totalreflexion erhalten bleibt.

3. Vorrichtung nach Anspruch 1, **dadurch gekennzeichnet, daß** der mindestens eine Sender (1) und der mindestens eine Empfänger (2) als SMD-Bauelemente ausgebildet sind.

4. Vorrichtung nach Anspruch 2, **dadurch gekennzeichnet, daß** eine Schaltungsplatine (12) vorgesehen ist und der mindestens eine Sender (1) und der mindestens eine Empfänger (2) als SMD-Bauelemente ausgebildet sind.

5. Vorrichtung nach einem der vorhergehenden Ansprüche, **dadurch gekennzeichnet, daß** die Strahleintrittsfläche (3) und/oder die Strahlaustrittsfläche (5) als Sammellinsen ausgebildet sind.

6. Vorrichtung nach Anspruch 5, **dadurch gekennzeichnet, daß** die Sammellinsen der Strahleintritts- (3) und der Strahlaustrittsfläche (5) als Fresnellinsen oder als mehrere einzelne auf einer ebenen Fläche angeordnete Linsenelemente (3.1) ausgebildet sind oder dass die Strahleintritts- (3) und die Strahlaustrittsfläche (5) wechselseitig unterschiedlich mit diesen beiden Arten der Sammellinsen versehen sind.

7. Vorrichtung nach mindestens einem der Ansprüche 1, 3 bis 6, **dadurch gekennzeichnet, dass** die Ablenkflächen (6, 6') auf der von der Schaltungsplatine (12) abgelegenen Seite des Strahlungsleiters (4) vorgesehen und bei Draufsicht auf die lange Schmalseite der Schaltungsplatine (12) unter einem Winkel von 45 Grad zur Ebene der Schaltungsplatine (12) geneigt sind.

8. Vorrichtung nach mindestens einem der vorhergehenden Ansprüche, **dadurch gekennzeichnet, dass** die Krümmung torisch ist.

9. Vorrichtung nach einem der vorhergehenden Ansprüche, **dadurch gekennzeichnet, dass** mehrere Sender (1) vorgesehen sind, denen auf einer Strahleintrittsfläche (3) jeweils ein separates Linsenelement (3.1) zugeordnet ist und dass ein Empfänger (2) vorgesehen ist, dem auf der Strahlaustrittsfläche (5) eine Fresnellinse zugeordnet ist.

10. Vorrichtung nach einem der Ansprüche 5 bis 9, **dadurch gekennzeichnet, dass** die Sammellinsen sphärisch ausgebildet sind.

## Claims

1. Device for detecting wetting events on a window pane (11), in particular a windscreen of a motor vehicle, comprising a radiation transmitter device having at least one transmitter (1) comprising a radiation conductor (4) which can be coupled to the window pane (11) and has a beam entry surface (3) for receiving the transmitted radiation and a beam exit surface (5) for emitting the radiation, and comprising a radiation receiver device which receives the emerging radiation and has at least one receiver (2), the transmitter (1) and the receiver (2) being mounted on a printed circuit board (12), and the radiation conductor (4) being aligned approximately parallel to the printed circuit board (12), and the beam entry surface (3) and/or the beam exit surface (5) being arranged on the parallel side of the radiation conductor (4) facing the printed circuit board (12), and the optical axis of the transmitter (1) or receiver (2) being aligned perpendicular to the beam entry surface (3) or the beam exit surface (5), and the radiation conductor (4) having at least one input-side or output-side deflecting surface (6, 6') with the aid of which the radiation entering the radiation conductor (4) is guided at right angles into the interior of the radiation conductor (4), or the radiation to be directed out of the radiation conductor (4) onto the receiver (2) is guided at right angles out of the interior of the radiation conductor (4), **characterized in that** the radiation conductor (4) has a plurality of diverting surfaces (7, 8, 7', 8') with the aid of which the emitted radiation is guided in an input-side section (4.1) into the window pane (11), and the radiation coming from the window pane (11) is guided in an output-side section (4.2) onto the output-side deflecting surface (6'), and **in that** at least one of the diverting surfaces (7, 8, 7', 8') and/or at least one of the deflecting surfaces (6, 6') is curved convexly outwards or concavely inwards for the purpose of causing convergence or divergence of the radiation, the reflection by total reflection being maintained.

2. Device for detecting wetting events on a window pane, in particular a windscreen of a motor vehicle, comprising a radiation transmitter device having at least one transmitter, comprising a radiation conductor which can be coupled to the window pane and has a beam entry surface for receiving the transmitted radiation, and comprising a radiation receiver device which receives the emerging radiation and has at least one receiver, the radiation conductor (4) having at least one input-side or output-side deflecting surface (6, 6') with the aid of which the radiation entering the radiation conductor (4) is guided at right angles into the interior of the radiation conductor (4), or the radiation to be directed out of the radiation conductor (4) onto the receiver (2) is guided at right angles out of the interior of the radiation conductor, **characterized in that** the radiation conductor (4) has a plurality of diverting surfaces (7, 8, 7', 8') with the aid of which the emitted radiation is guided in an input-side section (4.1) into the window pane (11), and the radiation coming from the window pane (11) is guided in an output-side section (4.2) onto the output-side deflecting surface (6'), and **in that** at least one of the diverting surfaces (7, 8, 7', 8') and/or at least one of the deflecting surfaces (6, 6') is curved convexly outwards or concavely inwards for the purpose of causing convergence or divergence of the radiation, the reflection by total reflection being maintained.

3. Device according to Claim 1, **characterized in that** the at least one transmitter (1) and the at least one receiver (2) are designed as SMD components.

4. Device according to Claim 2, **characterized in that** a printed circuit board (12) is provided and the at least one transmitter (1) and the at least one receiver (2) are designed as SMD components.

5. Device according to one of the preceding claims, **characterized in that** the beam entry surface (3) and/or the beam exit surface (5) are designed as positive lenses.

6. Device according to Claim 5, **characterized in that** the positive lenses of the beam entry surface (3) and the beam exit surface (5) are designed as Fresnel lenses or as a plurality of individual lens elements (3.1) arranged on a flat surface, or **in that** the beam entry surface (3) and the beam exit surface (5) are provided in a mutually differing fashion with these two types of positive lenses.

7. Device according to at least one of Claims 1, 3 to 6, **characterized in that** the deflecting surfaces (6, 6') are provided on the side, averted from the printed circuit board (12) of the radiation conductor (4), and are inclined in top view on the long narrow side of the printed circuit board (12) at an angle of 45 degrees to the plane of the printed circuit board (12).

8. Device according to at least one of the preceding claims, **characterized in that** the curvature is toroidal.

9. Device according to one of the preceding claims, **characterized in that** a plurality of transmitters (1) are provided which are respectively assigned a separate lens element (3.1) on a beam entry surface (3), and **in that** a receiver (2) is provided which is assigned a Fresnel lens on the beam exit surface (5).

10. Device according to one of Claims 5 to 9, **characterized in that** the positive lenses are of spherical design.

## Revendications

1. Dispositif de détection du niveau d'humidité sur une vitre (11), notamment un pare-brise de véhicule automobile, comprenant une installation d'émission de rayonnement avec au moins un émetteur (1), un guide de rayonnement (4) susceptible d'être couplé à la vitre (11), ayant une surface d'entrée de rayonnement (3) pour recevoir le rayonnement émis et une surface de sortie de rayonnement (5) pour recevoir le rayonnement ainsi qu'une installation de réception de rayonnement recevant le rayonnement émis comportant au moins un récepteur (2),
l'émetteur (1) et le récepteur (2) étant installés sur une platine de circuit (12) et le guide de rayonnement (4) est aligné sensiblement parallèlement à la platine (12),
la surface d'entrée de rayonnement (3) et/ou la surface de sortie de rayonnement (5) est (sont) prévue(s) sur le côté parallèle du guide de rayonnement (4) tourné vers la platine (12) et
l'axe optique de l'émetteur (1) ou du récepteur (2) est perpendiculaire à la surface d'entrée (3) ou à la surface de sortie (5) du rayonnement et
le guide rayonnement (4) comporte au moins une surface déflectrice (6, 6') du côté de l'entrée ou du côté de la sortie, surface qui conduit le rayonnement entrant dans le guide de rayonnement (4), à angle droit, à l'intérieur du guide de rayonnement (4) ou qui conduit le rayonnement sortant du guide de lumière (4) vers le récepteur (2) à angle droit à partir de l'intérieur du guide de rayonnement (4),
**caractérisé en ce que**
le guide de rayonnement (4) comporte plusieurs surfaces de déflexion (7, 8, 7', 8') à l'aide desquelles le rayonnement émis est guidé dans un segment (4.1) du côté de l'entrée dans la vitre (11) et il guide le rayonnement venant de la vitre (11) dans un segment du côté de sortie (4.2), sur la surface déflectrice (6') du côté de la sortie et
au moins l'une des surfaces déflectrices (7, 8, 7', 8') et/ou au moins l'une des surfaces déflectrices (6, 6') est courbée de manière convexe vers l'extérieur ou convexe vers l'intérieur pour faire converger ou diverger le rayonnement,
et on conserve un renvoi par réflexion totale.

2. Dispositif de détection du niveau d'humidité sur une vitre (1), notamment un pare-brise de véhicule automobile, comprenant une installation d'émission de rayonnement avec au moins un émetteur, un guide de rayonnement susceptible d'être couplé à la vitre, ayant une surface d'entrée de rayonnement pour recevoir le rayonnement émis et une surface de sortie de rayonnement pour recevoir le rayonnement ainsi qu'une installation de réception de rayonnement recevant le rayonnement émis comportant au moins un récepteur,
le guide de rayonnement (4) comporte au moins une surface déflectrice (6, 6') du côté de l'entrée ou du côté de la sortie, surface qui conduit le rayonnement entrant dans le guide de rayonnement (4), à angle droit, à l'intérieur du guide de rayonnement (4) ou qui conduit le rayonnement sortant du guide de lumière (4) vers le récepteur (2) à angle droit à partir de l'intérieur du guide de rayonnement (4),
**caractérisé en ce que**
le guide de rayonnement (4) comporte plusieurs surfaces de déflexion (7, 8, 7', 8') à l'aide desquelles le rayonnement émis est guidé dans un segment (4,1) du côté de l'entrée dans la vitre (11) et il guide le rayonnement venant de la vitre (11) dans un segment du côté de sortie (4.2), sur la surface déflectrice (6') du côté de la sortie et
au moins l'une des surfaces déflectrices (7, 8, 7', 8') et/ou au moins l'une des surfaces déflectrices (6, 6') est courbée de manière convexe vers l'extérieur ou convexe vers l'intérieur pour faire converger ou diverger le rayonnement,
et on conserve un renvoi par réflexion totale.

3. Dispositif selon la revendication 1,
**caractérisé en ce qu'**
au moins un émetteur (1) et au moins un récepteur (2) sont des composants SMD.

4. Dispositif selon la revendication 1,
**caractérisé par**
une platine de circuit (12) et un émetteur (1) et un récepteur (2) au moins réalisés comme composants SMD.

5. Dispositif selon l'une des revendications précédentes,
**caractérisé en ce que**
la surface d'entrée de rayonnement (3) et/ou la surface de sortie de rayonnement (5) sont des lentilles collectrices.

6. Dispositif selon la revendication 5,
**caractérisé en ce que**
les lentilles collectrices des surfaces d'entrée de rayonnement (3) et de sortie de rayonnement (5) sont des lentilles de Fresnel ou plusieurs éléments de lentilles (3.1) séparés placés dans un plan et
la surface d'entrée (3) et la surface de sortie (5) de rayonnement sont munies alternativement, différemment de ces deux types de lentilles collectrices.

7. Dispositif selon au moins l'une des revendications 1, 3 à 6,
**caractérisé en ce que**
les surfaces déflectrices (6, 6') sont prévues sur le côté du guide de rayonnement (4) à l'opposé de la platine (12) et en vue de dessus sur le côté étroit, long de la platine (12), ces surfaces font un angle de 45° par rapport au plan de la platine (12).

8. Dispositif selon au moins l'une des revendications précédentes,
**caractérisé en ce que**
la courbure est une surface torique (9).

9. Dispositif selon au moins l'une des revendications précédentes,
**caractérisé par**
plusieurs émetteurs (1) auxquels est associé chaque fois un élément de lentille séparé (3.1) sur une surface d'entrée de rayonnement (3) et un récepteur (2) auquel est associée une lentille de Fresnel sur la surface de sortie de rayonnement.

10. Dispositif selon l'une des revendications 5 à 9,
**caractérisé en ce que**
les lentilles collectrices sont des lentilles sphériques.
